# EUROPÄISCHE PATENTSCHRIFT

(11) **EP 1 356 213 B1**
(45) Veröffentlichungstag und Bekanntmachung des Hinweises auf die Patenterteilung: **08.08.2007**
(21) Anmeldenummer: 01994818.1
(22) Anmeldetag: 19.12.2001
(51) Int. Cl.: F16D 55/22

(54) **FAHRZEUGBREMSE**
AUTOMOTIVE BRAKE
FREIN DE VEHICULE

(30) Priorität: 23.01.2001 DE 10102761
(43) Veröffentlichungstag der Anmeldung: 29.10.2003
(73) Patentinhaber: Volkswagen Aktiengesellschaft, 38436 Wolfsburg (DE)
(72) Erfinder: SCHMIDT, Roger, 38116 Braunschweig (DE)
(86) Internationale Anmeldenummer: PCT/EP2001/015077
(87) Internationale Veröffentlichungsnummer: WO 2002/059495

(56) Entgegenhaltungen:
- WO-A-99/27269
- DE-A- 19 963 030
- DE-C- 19 908 914
- US-A- 3 931 871
- US-A- 4 313 528

## Beschreibung

Die Erfindung bezieht sich auf eine Fahrzeugbremse nach dem Oberbegriff von Patentanspruch 1.

Eine solche ist aus der WO99/27269 A1 bekannt. Das dort offenbarte Bremsenabdeckbleck weist einen Wandstreifen auf, der sich radial um den Außenumfang einer Bremsscheibe erstreckt. Der Rand dieses Wandstreifens ist radial nach außen abgewinkelt, so daß sich ein umlaufender Flansch ergibt.

Weitere Fahrzeugbremsen mit einem Bremsenabdeckblech sind aus der DE 41 41 700 A1 und der DE 35 41 522 C2 bekannt. Bei diesen Bremsen dient das Bremsenabdeckblech vor allem dem Schutz der Bremsscheibe gegen Schmutz und Spritzwasser, um bei einer Betätigung der Bremse ein gutes Ansprechen zu gewährleisten und den Verschleiß an der Bremsscheibe wie auch an den Bremsbelägen des Bremssattels gering zu halten. Bei Fahrzeugen für den Offroadbetrieb kann auch der Bremssattel von dem Bremsenabdeckblech aufwendig mitumschlossen werden. Neben der vorgenannten Schutzfunktion dient das Bremsenabdeckblech auch der Abschirmung von weiteren Teilen einer Radaufhängung gegen die Einwirkung von Wärme, die bei einer starken Beanspruchung der Bremse entsteht.

Aufgrund dieser Funktionen ist das feststehende Bremsenabdeckblech mit einem lediglich geringen Abstand zu der mit einem Fahrzeugrad rotierenden Bremsscheibe angeordnet. Bei der Verwendung von Bremsscheiben mit großem Durchmesser ist auch der Abstand zwischen der Außenwand des Bremsenabdeckbleches und der Felge des zugehörigen Fahrzeugrades gering.

Dies führt im Winterbetrieb zu Schwierigkeiten. Betriebsversuche haben gezeigt, daß loser Schnee, der neben oder unter dem Fahrzeug aufgewirbelt wird, durch die Felgen der Fahrzeugräder strömt. Mitunter lagert sich Schneestaub an der Innenwand der Felge ab und baut sich bis zu dem Bremsenabdeckblech auf. Während des Fahrbetriebs verhindert die Rotation der Felge wie auch die Abwärme der Bremsscheibe, die auch das Bremsenabdeckblech erwärmt, ein Festfrieren der Felge an dem Bremseriabdeckblech, da zwischen den verfestigten Schneeanlagerungen und dem Bremsenabdeckblech stets ein geringer Spalt bestehen bleibt.

Wird das Fahrzeug bei Frosttemperaturen abgestellt, so besteht bei starken Schneeanlagerungen an die Felgeninnenwand das Problem, daß der angelagerte und verfestigte Schneestaub mit der Restwärme des Bremsenabdeckbleches zunächst teilweise geschmolzen wird, jedoch das unter Umständen nicht ablaufende Schmelzwasser nach einiger Zeit wieder gefriert. Insbesondere bei geringer Restwärme kommt es bisweilen vor, daß das Schmelzwasser in den schmalen Spalt zwischen dem angelagerten Schneestaub und dem Bremsenabdeckblech hineinläuft und nach dem erneuten Anfrieren die Fahrzeugräder blockiert. Dieses Problem tritt vor allem bei Fahrzeughinterrädern auf.

Der Erfindung liegt die Aufgabe zugrunde, hier Abhilfe zu schaffen. Insbesondere liegt der Erfindung die Aufgabe zugrunde, ein Vereisen oder Festfrieren der Fahrzeugräder im Winterbetrieb zu verhindern.

Diese Aufgabe wird durch eine Fahrzeugbremse gemäß Patentanspruch 1 gelöst.

Praktische Versuche haben gezeigt, daß mit dieser an sich einfachen Maßnahme die Gefahr des Festfrierens der Felge an dem Bremsenabdeckblech erheblich vermindert werden kann. Der nach außen abstehende und damit von dem Wandstreifen in Richtung einer Radfelge vorspringende Wandabschnitt verhindert eine flächige Anlagerung des Schneestaubes bis eng an das Bremsenabdeckblech, so daß bei einem Abstellen des Fahrzeuges bereits ein größerer Abstand zwischen den Schneeanlagerungen an der Felge und dem Bremsenabdeckblech besteht.

Der abstehende Wandabschnitt kann im Prinzip an jeder Stelle an dem Außenumfang des Wandstreifens angeordnet werden. Beispielsweise ist es möglich, den abstehenden Wandabschnitt unmittelbar nach dem Bremssattel, d. h. bei Betrachtung in Vorwärtsdrehrichtung der Bremsscheibe an der Auslaufseite des Bremssattels oder aber auch an der Einlaufseite des Bremssattels anzuordnen. Es können auch mehrere abstehende Wandabschnitte an dem Wandstreifen vorgesehen werden.

Vorzugsweise erstreckt sich der abstehende Wandabschnitt im wesentlichen über die gesamte Breite des Wandstreifens, um so einen möglichst großen schneefreien Zwischenraum zwischen den Schneeanlagerungen an der Felge des Fahrzeugrades und dem Außenumfang des Bremsenabdeckbleches zu erhalten.

In einer vorteilhaften Ausgestaltung der Erfindung ist der radial nach außen abstehende Wandabschnitt durch einen Vorsprung gebildet, der in dem Endabschnitt ausgeformt ist. Dieser läßt sich bei einem Bremsenabdeckblech, das aus einem Stück gefertigt wird, besonders günstig, beispielsweise als hinterschneidungsfreie Wandvorvvölbung herstellen.

Weiterhin kann der Vorsprung bezogen auf die Quer- bzw. Breitenrichtung des Wandstreifens zu dessen Außenrand hin schräg nach hinten, d. h. in der Vorwärtsdrehrichtung der Bremsscheibe verlaufen, wodurch sich dessen Wirkung im Hinblick auf das Vermeiden des Festfrierens eines Fahrzeugrades weiter verbessern läßt. Die Ableitung von Schneestaub von der Radfelge weg wird so zusätzlich unterstützt. Allerdings kann der Vorsprung auch rechtwinklig zu der Bremsscheibe orientiert werden.

Vorzugsweise bildet der Vorsprung rückseitig eine an einem Längsende offene Rille aus. Er ist damit einfach herstellbar.

In einer Einbauposition, bei der sich der abstehende Wandabschnitt etwa in Bereich der unteren Bremsscheibenhälfte befindet, hat die zu dem offenen Ende abfallende Rille den weiteren Vorteil, daß Wasser in der Rille zu dem offenen Ende hin läuft. Insbesondere von dem Bremssattel abtropfendes Wasser kann so schnell nach außen abgeleitet werden. Der Vorsprung übernimmt dann in Zusammenwirkung mit seiner rückseitigen nutförmigen bzw. rillenförmigen Ausbildung sowohl die Funktion des Schneeabstreifens als auch die Funktion der Ableitung von Wasser aus der Bremse.

Bei einer besonders wirkungsvollen und fertigungstechnisch günstigen Ausführungsvariante weist die Rille mit Ausnahme des Bereichs an ihrem geschlossenen Ende eine konstante Profiltiefe in dem Wandstreifen auf. Gleichzeitig erweitert sich der Wandstreifen zu der Bremsscheibe hin. Letzteres sorgt dafür, daß sich innerhalb des Raums zwischen dem Bremsenabdeckblech und der Bremsscheibe verfangende Partikel oder auch Wasser mit der Zeit einfach nach außen abgeführt werden.

In einer alternativen Ausgestaltung der Erfindung ist der radial nach außen weisende Wandabschnitt zu dem Wandstreifen radial nach außen angewinkelt. Hierdurch kann genauso wie im Fall des vorstehend erläuterten Vorsprungs ein größerer Außenbereich um das Bremsenabdeckblech schneefrei gehalten werden, so daß das nach dem Abstellen des Fahrzeuges geschmolzene Wasser zum einen besser ablaufen kann und zum anderen in der Regel die Schmelzwassermenge nicht mehr ausreicht, um bei einem Anfrieren den Zwischenraum zwischen den Schneeanlagerungen an der Felge und dem Bremsenabdeckblech auszufüllen.

Vorzugsweise wird der nach außen weisende bzw. angewinkelte Wandabschnitt dadurch hergestellt, daß eine den Wandstreifen fortsetzende Zunge einfach nach außen umgebogen wird. Dabei kann der Winkel zwischen dem Wandabschnitt und der Außenwand des Wandstreifens je nach Einbaulage auch im Hinblick auf die Anordnung des Bremssattels festgelegt werden. Er liegt vorzugsweise im Bereich von 90 bis 130 Grad.

Um zu vermeiden, daß bei einer Anordnung des Vorsprunges unterhalb des Bremssattels größere Mengen von Schmelzwasser von dem Bremssattel über den nach außen weisenden Wandabschnitt in den Raum zwischen dem Bremsenabdeckblech und der Bremsscheibe gelangen kann, ist der nach außen angewinkelte Wandabschnitt in der Einbaulage in einer weiteren vorteilhaften Ausgestaltung der Erfindung gegenüber der Horizontalen zu seiner Abrißkante hin geneigt. Auf den angewinkelten Wandabschnitt tropfendes Schmelzwasser wird somit gleich nach außen abgeleitet.

Die Erfindung wird nachfolgend anhand von zwei in der Zeichnung dargestellten Ausführungsbeispielen näher erläutert. Die Zeichnung zeigt in:
- Figur 1: eine schematische Seitenansicht von außen auf eine Fahrzeugbremse mit einer Bremsscheibe, einem Bremssattel sowie einem dahinterliegenden Bremsenabdeckblech in Richtung auf den Fahrzeugaufbau hin gesehen,
- Figur 2: eine räumliche Ansicht des Bremsenabdeckbleches eines ersten Ausführungsbeispiels der Fahrzeugbremse aus der Richtung des Fahrzeugaufbaus gesehen,
- Figur 3: eine räumliche Ansicht des Bremsenabdeckbleches eines zweiten Ausführungsbeispiels der Fahrzeugbremse aus der Richtung des Fahrzeugaufbaus gesehen,
- Figur 4: eine räumliche Teilansicht zur Veranschaulichung eines zu dem Bremssattel auslaufenden Endabschnittes des Bremsenabdeckbleches nach dem ersten Ausführungsbeispiel aus der Richtung der Bremsscheibe aus gesehen, wobei das Bremsenabdeckblech gegenüber Figur 2 um 180° gedreht dargestellt ist, und in
- Figur 5: eine räumliche Teilansicht zur Veranschaulichung eines zu dem Bremssattel auslaufenden Endabschnittes des Bremsenabdeckbleches nach dem zweiten Ausführungsbeispiel aus der Richtung der Bremsscheibe aus gesehen, wobei das Bremsenabdeckblech gegenüber Figur 3 um 180° gedreht dargestellt ist.

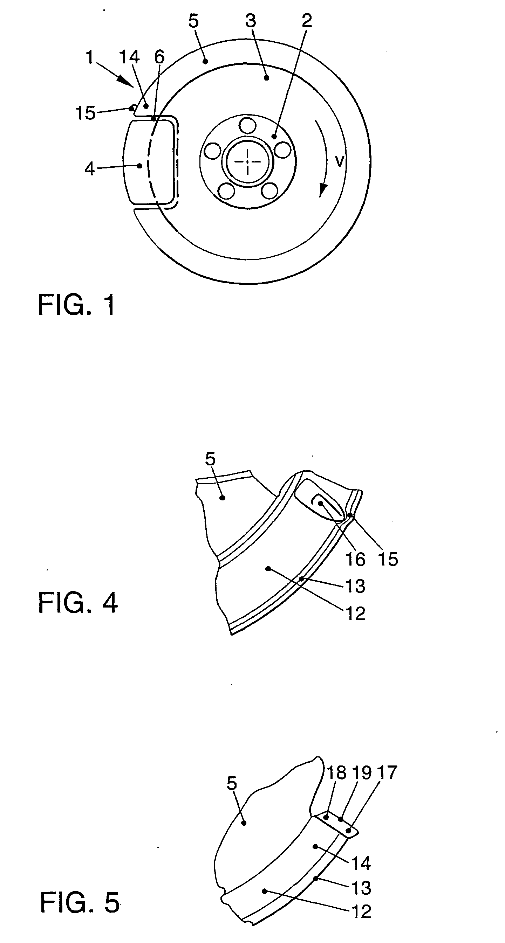

In Figur 1 ist eine schematische Ansicht einer Fahrzeugbremse 1 für ein Fahrzeugrad dargestellt. Das Fahrzeugrad, das hier nicht näher dargestellt ist, wird drehfest mit einem Radflansch 2 verbunden. Seine Vorwärtsdrehrichtung ist in Figur 1 durch einen Pfeil V angedeutet. Die zugehörige Fahrzeugbremse 1 umfaßt eine Bremsscheibe 3, die mittelbar mit dem Fahrzeugrad gekoppelt ist und folglich mit dem Fahrzeugrad dreht. Weiterhin umfaßt die Fahrzeugbremse 1 einen Bremssattel 4, der die Bremsscheibe 3 an ihren Außenumfang umgreift und bei Betrachtung von außen auf die Bremsscheibe 3 für ein Hinterrad hier beispielhaft in etwa in der Neun-Uhr-Position angeordnet ist. Die Fahrzeugbremse 1 wird in Richtung auf eine hier ebenfalls nicht dargestellte Radaufhängung zum Fahrzeuginneren hin durch ein Bremsenabdeckblech 5 abgeschlossen, das, wie auch der Bremssattel 4, feststehend angeordnet ist. An dem Bremsenabdeckblech 5 ist eine Ausnehmung 6 für den Bremssattel 4 vorgesehen, welche letzteren eng umschließt.

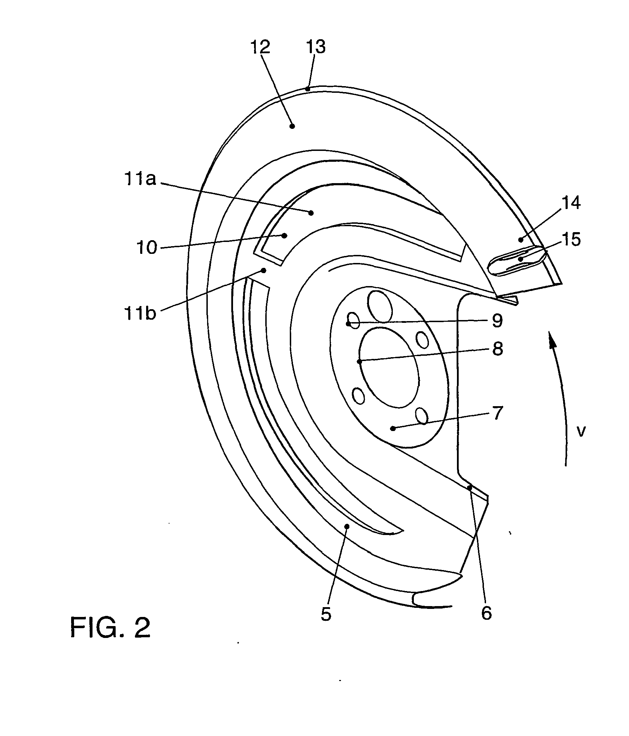

In einem ersten Ausführungsbeispiel der Fahrzeugbremse 1 ist das Bremsenabdeckblech 5 entsprechend Figur 2 ausgebildet. Das Bremsenabdeckblech 5 besitzt eine im wesentlichen tellerartige Form und ist umformtechnisch aus einer Blechronde einstückig hergestellt. Zur Befestigung an einer Radachse koaxial zu der Bremsscheibe 3 ist an dem Bremsenabdeckblech 5 ein zentraler Befestigungsflansch 7 mit einer mittigen Durchgangsöffnung 8 vorgesehen. Die Befestigung an der Radachse erfolgt über weitere Befestigungsöffnungen 9, die um die mittige Durchgangsöffnung 8 herum angeordnet sind. sowie geeignete Befestigungsmittel, die durch die weiteren Öffnungen 9 hindurchgeführt werden.

An den kreisringförmigen Befestigungsflansch 7 schließt nach einer Axialstufe radial ein sichelförmiger Abdeckabschnitt 10 an, der die fahrzeugseitige Seitenfläche der Bremsscheibe 3 überlappt, jedoch im Bereich des Bremssattels 4 unterbrochen ist. Der Abdeckabschnitt 10 weist kreisringsegmentförmige Durchdrückungen 11 a auf, die durch radiale Stege 11 b voneinander getrennt sind und der Versteifung dienen.

Der Abdeckabschnitt 10 ist wiederum von einem Wandstreifen 12 umgeben, der im wesentlichen radial um den Außenumfang der Bremsscheibe 3 angeordnet ist. Im Einbauzustand der Fahrzeugbremse 1 an einem Fahrzeugrad erstreckt sich der Wandstreifen 12 bis in den Raum zwischen dem Außenumfang der Bremsscheibe 3 und der Innenwand der Felge des betreffenden Fahrzeugrades. Bei der Verwendung von im Vergleich zu dem Durchmesser der Felge großen Bremsscheiben 3 ist folglich der Abstand zwischen dem Wandstreifen 12 und der Felge verhältnismäßig gering.

Zudem ist der umlaufende Wandstreifen 12, genauso wie der Abdeckabschnitt 10, zur Ausbildung der Ausnehmung 6 im Bereich des Bremssattels 4 unterbrochen. Wie Figur 2 entnommen werden kann, ist der Wandstreifen 12 im Profil etwas geneigt, so daß sich der durch den Wandstreifen 12 gebildete Teilring zu der Bremsscheibe 3 hin erweitert. Partikel oder Wasser, die bzw. das sich in dem Raum zwischen der Bremsscheibe 3 und dem Bremsenabdeckblech 5 ansammelt, wird hierdurch nach außen abgeleitet. Gleichzeitig wird an die Außenseite gespritztes Wasser abgehalten. Eine kleine Krempe 13 an dem Außenrand des Wandstreifens 12 sorgt für ein zuverlässiges Ablaufen, so daß das Wasser nicht entlang der Außenwand in den vorgenannten Zwischenraum fließen kann.

Weiterhin ist an dem Wandstreifen 12 an einem zu der Ausnehmung 6 auslaufenden Endabschnitt 14, der bei Betrachtung in Vorwärtsdrehrichtung der Bremsscheibe 3 unmittelbar hinter dem Bremssattel 4 liegt, ein radial nach außen abstehender Wandabschnitt in Form eines Vorsprungs 15 ausgebildet, dem innenseitig eine komplementäre Rille 16 gegenüberliegt, wie dies in Figur 4 gezeigt ist. Der Vorsprung 15 steht radial über den Wandstreifen 12 in Richtung der Felge des Fahrzeugrades hinaus, wobei in dem dargestellten Ausführungsbeispiel der durch die Rille 16 gebildete Vorsprung 15 sogar die Krempe 13 überragt. Er ist in dem Endabschnitt 14 ausgeformt, wobei das wannenförmige Profil der komplementären Rille 16 an den zu der Krempe 13 weisenden Längsende offen ist.

Wie insbesondere der Detailansicht des Endabschnittes 14 in Figur 4 entnommen werden kann, erstreckt sich der Vorsprung 15 bzw. die Rille 16 im wesentlichen über die gesamte Breite des Wandstreifens 12. Zudem ist der Vorsprung 15 bzw. die Rille 16 zu dem offenen Profilende hin bezogen auf die quer bzw. Breitenrichtung des Wandstreifen schräg nach hinten in der Vorwärtsdrehrichtung der Bremsscheibe 3 angestellt.

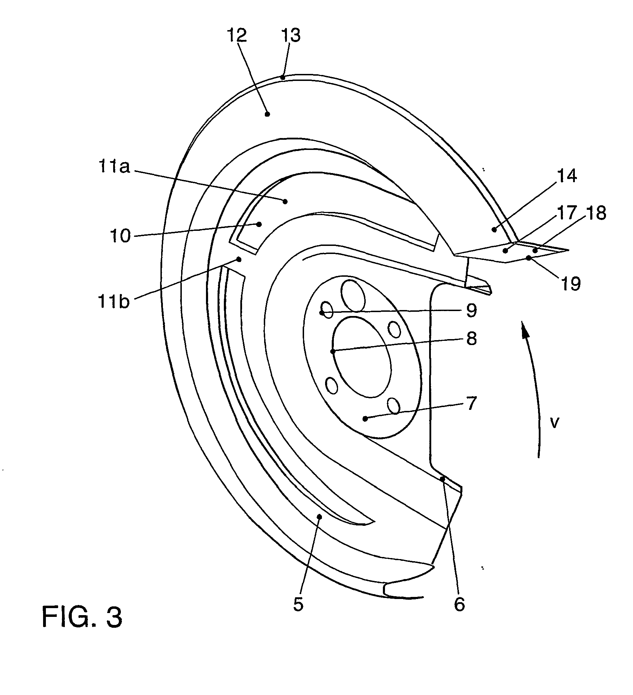

In einem zweiten Ausführungsbeispiel der Fahrzeugbremse 1 ist das Bremsenabdeckblech 5 entsprechend Figur 3 ausgebildet. Dieses Bremsenabdeckblech 5 des zweiten Ausführungsbeispiels unterscheidet sich von dem Bremsenabdeckblech 5 des ersten Ausführungsbeispiels lediglich durch die Ausgestaltung des unmittelbar nach dem Bremssattel 4 liegenden Endabschnittes 14 des Wandstreifens 12. Der Endabschnitt 14 des zweiten Ausführungsbeispiels ist in Figur 5 von der Bremsscheibenseite her im Detail dargestellt.

Wie den Figuren 3 und 5 entnommen werden kann, ist in dem zweiten Ausführungsbeispiel der radial nach außen abstehende Wandabschnitt als zu dem Wandstreifen 12 angewinkelter Wandabschnitt 17 ausgebildet, so daß auch hier wieder ein die Außenwand des Wandstreifens 12 überragender Vorsprung 18 gebildet wird. Der angewinkelte Wandabschnitt 17 ist durch eine Zunge des Wandstreifens 12 gebildet, die nach außen umgebogen ist. Dabei schließt der nach außen angewinkelte Wandabschnitt 17 mit der Außenseite des Wandstreifens 12 einen Winkel im Bereich von 90 bis 130 Grad ein.

Wird während des Fahrbetriebs auf schneebedeckter Fahrbahn an der Innenseite der Felge Schneestaub angelagert und verfestigt, so verhindern die Vorsprünge 15 bzw. 18, daß sich dieser Schneestaub im Bereich unmittelbar vor dem Bremssattel 4 bis eng an die Außenwand des Wandstreifen 12 aufbauen kann. Bei einem anschließenden Abstellen des Fahrzeuges mit betriebswarmer Bremse wird durch die verbleibende Restwärme der Bremse ein Teil des angelagerten Schneestaubs abgeschmolzen. Das dabei entstehende Schmelzwasser kann ungehindert abfließen, so daß bei einem nachfolgenden Wiederanfrieren von noch nicht abgeflossenem Schmelzwasser ein Festfrieren der Felge bzw. des verfestigten Schneestaubs an dem Bremsenabdeckblech nicht auftritt.

Die Erfindung ist nicht auf das hier detailliert beschriebene Ausführungsbeispiel beschränkt. Vielmehr kann der nach außen abstehende Wandabschnitt an nahezu jeder beliebigen Stelle des Wandstreifens 12 vorgesehen werden. Überdies kann der Bremssattel 4 auch in anderen Positionen bezogen auf die Umfangsrichtung der Bremsscheibe eingebaut werden. Der zentrale Befestigungsflansch 7 wird der jeweiligen Einbausituation angepaßt.

In einer in der Zeichnung nicht dargestellten Abwandlung des Ausführungsbeispiels wird der abstehende Wandabschnitt, d.h. der Vorsprung 15 mit der Rille 16 bzw. der angewinkelte Wandabschnitt 17 im Bereich etwa von der Drei-Uhr-Position bis zur Neun-Uhr-Position angeordnet.

Eine in dem Wandstreifen 12 ausgeformte Rille 16 verläuft mit ihrem Grund derart geneigt zu dem offenen Profilende hin, daß in der Einbauposition der Fahrzeugbremse 1 abtropfendes Wasser unmittelbar nach außen abgeleitet wird. Aufgrund der Neigung des Wandstreifens 12 nach außen wird hierzu die Rille 16 mit einer konstanten Profiltiefe ausgebildet. Sie läuft jedoch zu ihrem geschlossenen Profilende weich gekrümmt aus.

Im Falle des angewinkelten Wandabschnittes 17 ist dessen Anstellwinkel ist im Hinblick auf die Einbaulage des Bremssattels 4 derart abgestimmt, daß der angewinkelte Wandabschnitt 17 in der Einbaulage nach außen gegenüber der Horizontalen geneigt ist. Dadurch ist gewährleistet, daß beispielsweise von dem Bremssattel 4 abtropfendes Wasser nicht erst in den Raum zwischen dem Bremsenabdeckblech 5 und der Bremsscheibe 3 fließt, sondern über die Abrißkante 19 des geneigten Wandabschnittes 17 abläuft.

### BEZUGSZEICHENLISTE

- 1: Fahrzeugbremse
- 2: Radflansch
- 3: Bremsscheibe
- 4: Bremssattel
- 5: Bremsenabdeckblech
- 6: Ausnehmung
- 7: Befestigungsflansch
- 8: Durchgangsöffnung
- 9: weitere Öffnungen
- 10: Abdeckabschnitt
- 11a: Durchdrückung
- 11b: Steg
- 12: Wandstreifen
- 13: Krempe
- 14: Endabschnitt
- 15: Vorsprung
- 16: Rille
- 17: angewinkelter Wandabschnitt
- 18: Vorsprung
- 19: Abrißkante

## Patentansprüche

1. Fahrzeugbremse für ein Kraftfahrzeug, umfassend eine Bremsscheibe (3), einen an einem Fahrzeugaufbau festzulegenden Bremssattel (4), der die Bremsscheibe (3) an ihrem Umfang umgreift, und ein Bremsenabdeckblech (5), das die Bremsscheibe (3) auf der zu dem Fahrzeugaufbau weisenden Seite abdeckt und eine Ausnehmung (6) für den Bremssattel (4) aufweist, wobei das Bremsenabdeckblech (5) einen im Bereich der Ausnehmung unterbrochenen Wandstreifen (12) aufweist, der im wesentlichen radial um den Außenumfang der Bremsscheibe (3) angeordnet ist, **dadurch gekennzeichnet, daß** an dem Wandstreifen (12) in Umfangsrichtung mindestens ein lokaler Vorsprung (15; 18) angeordnet ist, der durch einen radial nach außen abstehenden Wandabschnitt gebildet ist.

2. Fahrzeugbremse nach Anspruch 1, **dadurch gekennzeichnet, daß** der nach außen abstehende Wandabschnitt sich im wesentlichen über die gesamte Breite des Wandstreifens (12) erstreckt.

3. Fahrzeugbremse nach Anspruch 1 oder 2, **dadurch gekennzeichnet, daß** der Vorsprung (15) in dem Wandstreifen (12) ausgeformt ist.

4. Fahrzeugbremse nach Anspruch 2 oder 3, **dadurch gekennzeichnet, daß** der Vorsprung (15) bei Betrachtung in Vorwärtsdrehrichtung der Bremsscheibe (3) an einem Endabschnitt des Wandstreifens (12) auf der Auslaufseite des Bremssattels (4) angeordnet ist.

5. Fahrzeugbremse nach Anspruch 4, **dadurch gekennzeichnet, daß** der Vorsprung (15) bezogen auf die Quer- bzw. Breitenrichtung des Wandstreifens (12) zu dessen Außenrand hin schräg nach hinten, d. h. in Vorwärtsdrehrichtung der Bremsscheibe (3), verläuft.

6. Fahrzeugbremse nach einem der Ansprüche 2 bis 5, **dadurch gekennzeichnet, daß** der Vorsprung (15) rückseitig eine an einem Längsende offene Rille (16) ausbildet.

7. Fahrzeugbremse nach Anspruch 6, **dadurch gekennzeichnet, daß** die Rille (16) mit Ausnahme des Bereichs an ihrem geschlossenen Ende eine konstante Profiltiefe in dem Wandstreifen (12) aufweist und der Wandstreifen (12) sich zu der Bremsscheibe (3) hin aufweitet.

8. Fahrzeugbremse nach Anspruch 1 oder 2, **dadurch gekennzeichnet, daß** der radial nach außen abstehende Wandabschnitt als zu dem Wandstreifen (12) radial nach außen angewinkelter Wandabschnitt (17) ausgebildet ist.

9. Fahrzeugbremse nach Anspruch 8, **dadurch gekennzeichnet, daß** der nach außen angewinkelte Wandabschnitt (17) von dem Wandstreifen (12) nach außen umgebogen ist.

10. Fahrzeugbremse nach Anspruch 8 oder 9, **dadurch gekennzeichnet, daß** der nach außen angewinkelte Wandabschnitt (17) mit der Außenseite des Wandstreifens (12) einen Winkel im Bereich von 90 bis 130. Grad einschließt.

## Claims

1. Vehicle brake for a motor vehicle, comprising a brake disc (3), a brake calliper (4) which is to be fixed to a vehicle body and engages around the circumference of the brake disc (3), and a brake cover plate (5) which covers the brake disc (3) on the side pointing towards the vehicle body and has a recess (6) for the brake calliper (4), wherein the brake cover plate (5) has a wall strip (12) which is interrupted in the region of the recess and is arranged substantially radially around the outer circumference of the brake disc (3), **characterized in that** at least one local projection (15; 18) which is formed by a wall section which protrudes radially outwards is arranged on the wall strip (12) in the circumferential direction.

2. Vehicle brake according to Claim 1, **characterized in that** the outwardly protruding wall section extends substantially over the entire width of the wall strip (12).

3. Vehicle brake according to Claim 1 or 2, **characterized in that** the projection (15) is formed in the wall strip (12).

4. Vehicle brake according to Claim 2 or 3, **characterized in that** the projection (15) is arranged on an end section of the wall strip (12) on the run-out side of the brake calliper (4), as viewed in the forward rotational direction of the brake disc (3).

5. Vehicle brake according to Claim 4, **characterized in that** the projection (15) extends obliquely rearwards towards the outer edge of the wall strip (12), in relation to the transverse or widthwise direction of the said wall strip (12), that is to say in the forward rotational direction of the brake disc (3).

6. Vehicle brake according to one of Claims 2 to 5, **characterized in that** the projection (15) forms, on the rear side, a groove (16) which is open at one longitudinal end.

7. Vehicle brake according to Claim 6, **characterized in that** the groove (16) has a constant profile depth in the wall strip (12), with the exception of the region at its closed end, and the wall strip (12) widens towards the brake disc (3).

8. Vehicle brake according to Claim 1 or 2, **characterized in that** the radially outwardly protruding wall section is configured as a wall section (17) which is angled away radially to the outside from the wall strip (12).

9. Vehicle brake according to Claim 8, **characterized in that** the wall section (17) which is angled away to the outside is bent over to the outside from the wall strip (12).

10. Vehicle brake according to Claim 8 or 9, **characterized in that** the wall section (17) which is angled away to the outside encloses an angle in the range from 90 to 130 degrees with the outer side of the wall strip (12).

## Revendications

1. Frein de véhicule pour un véhicule automobile, comprenant un disque de frein (3), un étrier de frein (4) à fixer sur une caisse de véhicule, lequel s'engage autour du disque de frein (3) sur sa périphérie, et une tôle de recouvrement de frein (5), qui recouvre le disque de frein (3) sur le côté tourné vers la caisse de véhicule et qui présente un évidement (6) pour l'étrier de frein (4), sachant que la tôle de recouvrement de frein (5) présente une bande de paroi (12) qui est interrompue dans la région de l'évidement et qui est disposée essentiellement radialement autour de la circonférence extérieure du disque de frein (3), **caractérisé en ce qu'**au moins une saillie locale (15 ; 18) est disposée en direction circonférentielle sur la bande de paroi (12), saillie qui est formée par une portion de paroi dépassant radialement vers l'extérieur.

2. Frein de véhicule selon la revendication 1, **caractérisé en ce que** la portion de paroi dépassant radialement vers l'extérieur s'étend sensiblement sur toute la largeur de la bande de paroi (12).

3. Frein de véhicule selon la revendication 1 ou 2, **caractérisé en ce que** la saillie (15) est façonnée dans la bande de paroi (12).

4. Frein de véhicule selon la revendication 2 ou 3, **caractérisé en ce que** la saillie (15) est disposée, en regardant dans le sens de rotation en avant du disque de frein (3), sur une partie terminale de la bande de paroi (12) sur le côté de sortie de l'étrier de frein (4).

5. Frein de véhicule selon la revendication 4, **caractérisé en ce que** la saillie (15) s'étend, par rapport à la direction transversale ou direction de la largeur de la bande de paroi (12), en direction du bord extérieur de celle-ci en oblique vers l'arrière, c'est-à-dire dans le sens de rotation en avant du disque de frein (3).

6. Frein de véhicule selon l'une quelconque des revendications 2 à 5, **caractérisé en ce que** la saillie (15) forme sur le côté arrière une gorge (16) ouverte à une extrémité longitudinale.

7. Frein de véhicule selon la revendication 6, **caractérisé en ce que** la gorge (16) présente, à l'exception de la région à son extrémité fermée, une profondeur de profil constante dans la bande de paroi (12), et la bande de paroi (12) s'élargit en direction du disque de frein (3).

8. Frein de véhicule selon la revendication 1 ou 2, **caractérisé en ce que** la portion de paroi dépassant radialement vers l'extérieur est réalisée sous la forme d'une portion de paroi (17) en angle radialement vers l'extérieur par rapport à la bande de paroi (12).

9. Frein de véhicule selon la revendication 8, **caractérisé en ce que** la portion de paroi (17) en angle vers l'extérieur est recourbée vers l'extérieur à partir de la bande de paroi (12).

10. Frein de véhicule selon la revendication 8 ou 9, **caractérisé en ce que** la portion de paroi (17) en angle vers l'extérieur forme avec le côté extérieur de la bande de paroi (12) un angle compris entre 90 et 130 degrés.
